# EUROPEAN PATENT APPLICATION

(11) **EP 4 518 082 A1**
(43) Date of publication of application: **05.03.2025**
(21) Application number: 23193913.3
(22) Date of filing: 29.08.2023
(51) Int. Cl.: H02J 7/00, H02J 50/12

(54) **WIRELESS POWER TRANSFER**

(71) Applicant: Koninklijke Philips N.V., 5656 AG Eindhoven (NL)
(72) Inventor: AGAFONOV, Aleksei, 5656AG Eindhoven (NL); LEBENS, Pascal Leonard Maria Theodoor, 5656AG Eindhoven (NL); DRAAK, Johannes Wilhelmus, 5656AG Eindhoven (NL)
(74) Representative: Philips Intellectual Property & Standards

(57) **Abstract**

A wireless power transfer system comprises a power transmitter (101) providing power to a power receiver (105) via an electromagnetic power transfer signal. The power receiver (105) comprises a circuit (107, 601,613) comprising a receiver coil (107) being part of a resonance circuit having a first resonance and a second resonance formed by the receiver coil (107) and at least a first and second capacitor (601). The resonance frequencies are substantially different. A power path (607, 605) provides power from the receiver coil (107) to a load (603) and includes a protective element (607) arranged to operate in a protective state in which a constraint on power transfer from the receiver coil (107) is applied and in a non-protective state in which the constraint is not applied. The protective element (607) switches to the protective state in response to a detection of a failure condition. The power receiver is arranged such that a resonance property of the second resonance is different for the protection element (607) when in the protective state than when in the non-protective state.

## Description

### FIELD OF THE INVENTION

The invention relates to wireless power transfer and in particular, but not exclusively, to the operation of a wireless power transfer system and power receiver providing inductive power transfer to high power devices, such as e.g. kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2kW.

A critical issue for wireless power transfer is that it can be performed safely and reliably.

For example, a potential problem with wireless power transfer is that power may unintentionally be transferred to e.g. metallic objects that happen to be in the vicinity of the power transmitter. For example, if a foreign object, such as e.g. a coin, key, ring etc., is placed upon the power transmitter platform arranged to receive a power receiver, the magnetic flux generated by the transmitter coil will introduce eddy currents in the metal objects which will cause the objects to heat up. The heat increase may be very significant and may be highly disadvantageous.

In order to reduce the risk of such scenarios arising, wireless power transfer system include foreign object detection where the power transmitter can detect the presence of a foreign object and reduce the transmit power and/or generate a user alert when a positive detection occurs. For example, the Qi system includes functionality for detecting a foreign object, and for reducing power if a foreign object is detected. Specifically, Qi specification version 1.2.1, section 11 describes various methods of detecting a foreign object.

A particularly challenging problem is to ensure that operation is safe and controlled even if failures occur in the involved devices and functions. For example, if a failure, such as a component failure, occurs in the power receiver, it is important to ensure the failure is handled appropriately and e.g. do not lead to further failure or damage, and in particular to ensure that unsafe situations do not arise.

Therefore, it is desirable for the system to be arranged to cope with various failures and deviant operational situations. However, such approaches are inherently difficult to accommodate as they may be unpredictable and have consequences extending beyond the specific location of the failure. Conventional wireless power transfers tend to not be optimum in terms of handling failures and typically the impact of the failure leads to undesirable operation scenarios and conditions.

Accordingly, an improved power transfer approach/system would be advantageous and, in particular, an approach allowing increased flexibility, reduced cost, reduced complexity, improved operation, improved failure handling, better controlled power transfer operation, increased power transfer robustness, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power receiver for wirelessly receiving power from a power transmitter via an electromagnetic power transfer signal, the power receiver comprising: a circuit comprising a receiver coil being part of a resonance circuit having a first resonance and a second resonance formed by the receiver coil and at least a first capacitor and a second capacitor, the first resonance having a first resonance frequency and the second resonance having a second resonance frequency, the first resonance frequency not exceeding twice a frequency of the power transfer signal and the second resonance frequency differing from the first resonance frequency by at least a factor of two; a power path coupling the receiver coil to a load and being arranged to provide power from the receiver coil to the load, the power path comprising: a protective element arranged to operate in a protective state in which a constraint on power transfer from the receiver coil is applied and in a non-protective state in which the constraint is not applied, the protective element being arranged to switch from the non-protective state to the protective state in response to a detection of a failure condition for the power receiver; and wherein a resonance property of the second resonance is different for the protection element being in the protective state than for the protection element being in the non-protective state.

The invention may allow improved performance in many embodiments and may in particular in many embodiments allow improved operation and handling of scenarios in which a failure may have occurred. The approach may provide improved protection of circuitry and/or protection against undesired operation and effects in case of failures. The approach may specifically allow that a failure detection may not only trigger protection of the power receiver but that it may also reliably, accurately, and/or with low complexity be detected by the power transmitter allowing the power transfer operation to be adapted to reflect the failure. The approach may for example be particularly suitable for detection of whether the power receiver is in a failure mode prior to initiating a power transfer with the power transfer only proceeding if the power receiver is not in the failure mode.

The approach may advantageously allow it to be detected whether the protective element is in a protective state or not without requiring any data transmission, or indeed in many embodiments without the power receiver being powered or active.

The approach may in many embodiments allow such functionality and effects while only negligibly affecting the normal power transfer operation, and indeed the impact on the power transfer resonance operation (supported by the first resonance) may be insignificant.

In many embodiments, the protective element may be arranged to irreversibly switch from the non-protective state to the protective state, and thus may not be capable of switching from the protective state to the non-protective state. In other embodiments, the protective element switching may be reversible and the protective element may also be able to switch from the protective state to the non-protective state, e.g. in response to a user interaction/reset or in response to a detection that the failure condition is no longer present.

The resonance property may specifically be a resonance frequency or a quality indication, including specifically whether the second resonance is present or not. In some embodiments, the second resonance may only be present when the power receiver is in the non-protective state.

In accordance with an optional feature of the invention, the protective element comprises a current limier arranged to limit a current through the protective element when in the protective state relative to when in the non-protective state.

This may provide particularly advantageous operation and/or allow facilitated and/or lower complexity implementation.

The current from the receiver coil to the load may flow through the protective element. The current limiter may be arranged to limit the current from the receiver coil to the load. In some cases, the current limiter may limit the current to substantially zero when in the protective state and/or may not limit the current when in the non-protective state. The current limiter may implement a switch function that is open circuit when in the protective state and short circuit when in the protective state.

In accordance with an optional feature of the invention, the protective element is coupled in series between the receiver coil and the load, and the second capacitor is coupled to a connection of the protective element also coupled to the load.

This may provide particularly advantageous operation and/or allow facilitated and/or lower complexity implementation. The protective element may be in series with the receiver coil 107 and the load such that current from the receiver coil flows through the protective element to the load. The second capacitor may be coupled to the side of the protective element that is also coupled to the load rather than to the receiver coil. The second capacitor may only be coupled to the receiver coil via the protective element.

In accordance with an optional feature of the invention, the first capacitor is in series with the receiver coil and the load, and the second capacitor is in parallel with the receiver coil and the load. This may provide particularly advantageous operation and/or allow facilitated and/or lower complexity implementation. The first resonance may be a series resonance and the second resonance may be a parallel resonance. The approach may facilitate determination of the resonance property of the second resonance.

In accordance with an optional feature of the invention, the protective element is arranged to decouple the second capacitor from the receiver coil when in the protective state.

This may provide particularly advantageous operation and/or allow facilitated and/or lower complexity implementation. The second capacitor may be coupled to the receiver coil when in the non-protective state.

In accordance with an optional feature of the invention, the input circuit comprises a third capacitor and the second resonance formed by the receiver coil and at least the second capacitor and the third capacitor, the third capacitor being coupled to the receiver coil both when the protective element is in the protective state and when in the non-protective state.

This may provide particularly advantageous operation and/or allow facilitated and/or lower complexity implementation.

In accordance with an optional feature of the invention, the power receiver further comprises a communicator for transmitting data to the power transmitter, the communicator being arranged to transmit configuration data indicative of a dependency of the resonance property on whether the protective element is in the protective state or in the non-protective state.

This may provide particularly advantageous operation and/or allow facilitated and/or lower complexity implementation.

In many embodiments, the configuration data may comprise an indication of a component arrangement of at least part of the power receiver.

In accordance with an optional feature of the invention, the power receiver further comprises a load switch arranged to switch the load and a fourth capacitor between being coupled to the receiver coil and being decoupled from the receiver coil, the second resonance being formed by at least the second capacitor and the fourth capacitor when the fourth capacitor is coupled to the receiver coil.

This may provide particularly advantageous operation and/or allow facilitated and/or lower complexity implementation.

In accordance with an optional feature of the invention, the protective element is an electrical fuse, and the second capacitor is disconnected from the power receiver coil if the electrical fuse is open-circuit.

This may provide particularly advantageous operation and/or allow facilitated and/or lower complexity implementation.

In accordance with an optional feature of the invention, the protective element is a sacrificial part.

This may provide particularly advantageous operation and/or allow facilitated and/or lower complexity implementation.

In accordance with another aspect of the invention, there is provided a wireless power transfer system comprising a power receiver in accordance with the above descriptions and a power transmitter comprising: a transmitter coil arranged to couple to the receiver coil; a driver arranged to generate a drive signal for the transmitter coil to generate the electromagnetic power transfer signal; a measurer arranged to determine a measured resonance property for the transmitter coil when coupled to the receiver coil, the measured resonance property being for a frequency differing from a frequency of the power transfer signal by at least a factor of two; and a controller arranged to control the power transfer to the power receiver in dependence on the measured resonance property.

In accordance with an optional feature of the invention, the power controller is arranged to inhibit power transfer in response to a detection that the measure resonance property meets a criterion indicating that the power receiver is in the protective state.

This may provide particularly advantageous operation in many embodiments.

In accordance with an optional feature of the invention, the measurer is arranged to determine the measured resonance property from a comparison of load measures of the transmitter coil for at least two different frequencies.

This may provide particularly advantageous operation in many embodiments.

A wireless power transfer system may comprise a power receiver as described above and a power transmitter comprising: a transmitter coil arranged to couple to the receiver coil; a driver arranged to generate a drive signal for the transmitter coil to generate the electromagnetic power transfer signal; a measurer arranged to determine a measured resonance property for the transmitter coil when coupled to the receiver coil, the measured resonance property being for a frequency differing from a frequency of the power transfer signal by at least a factor of two; and a controller arranged to control the power transfer to the power receiver in dependence on the measured resonance property.

In accordance with an optional feature of the invention, the power controller is arranged to inhibit power transfer in response to a detection that the measure resonance property meets a criterion indicating that the power receiver is in the protective state.

In accordance with an optional feature of the invention, the measurer is arranged to determine the measured resonance property from a comparison of load measures of the transmitter coil for at least two different frequencies.

In accordance with another aspect of the invention, there is provided method of operation for a power receiver for wirelessly receiving power from a power transmitter via an electromagnetic power transfer signal, the power receiver comprising: a circuit comprising a receiver coil being part of a resonance circuit having a first resonance and a second resonance formed by the receiver coil and at least a first capacitor and a second capacitor, the first resonance having a first resonance frequency and the second resonance having a second resonance frequency, the first resonance frequency not exceeding twice a frequency of the power transfer signal and the second resonance frequency differing from the first resonance frequency by at least a factor of two; a power path coupling the receiver coil to a load and being arranged to provide power from the receiver coil to the load, the power path comprising: a protective element arranged to operate in a protective state in which a constraint on power transfer from the receiver coil is applied and in a non-protective state in which the constraint is not applied, the protective element being arranged to switch from the non-protective state to the protective state in response to a detection of a failure condition for the power receiver; and the method comprises changing a resonance property of the second resonance when the protective element is in the protective state relative to when the protective element is in the non-protective state.

In accordance with another aspect of the invention, method of operation wireless power transfer system comprising a wireless power transmitter providing power to a power receiver via an electromagnetic power transfer signal, wherein the power receiver comprises: a circuit comprising a receiver coil being part of a resonance circuit having a first resonance and a second resonance formed by the receiver coil and at least a first capacitor and a second capacitor, the first resonance having a first resonance frequency and the second resonance having a second resonance frequency, the first resonance frequency not exceeding twice a frequency of the power transfer signal and the second resonance frequency differing from the first resonance frequency by at least a factor of two; a power path coupling the receiver coil to a load and being arranged to provide power from the receiver coil to the load, the power path comprising: a protective element arranged to operate in a protective state in which a constraint on power transfer from the receiver coil is applied and in a non-protective state in which the constraint is not applied, the protective element being arranged to switch from the non-protective state to the protective state in response to a detection of a failure condition for the power receiver; and the power transmitter comprises: a transmitter coil coupling to the receiver coil; and the method comprises: the power receiver changing a resonance property of the second resonance when the protective element is in the non-protective state relative to when the protective element is in the non-protective state; and the power transmitter performing the steps of: generating a drive signal for the transmitter coil to generate the electromagnetic power transfer signal; determining a measured resonance property for the transmitter coil when coupled to the receiver coil, the measured resonance property being for a frequency differing from a frequency of the power transfer signal by at least a factor of two; and controlling the power transfer to the power receiver in dependence on the measured resonance property.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of an electrical equivalence diagram for the power transfer function;
FIG. 3 illustrates an example of elements of a power transmitter in accordance with some embodiments of the invention;
FIG. 4 illustrates an example of a half bridge inverter for a power transmitter;
FIG. 5 illustrates an example of a full bridge inverter for a power transmitter;
FIG. 6 illustrates an example of elements of a power receiver in accordance with some embodiments of the invention;
FIG. 7 illustrates an example of resonances for a power transmitter coil in a wireless power transfer system;
FIG. 8 illustrates an example of resonances for a power transmitter coil of a power receiver in accordance with some embodiments of the invention;
FIG. 9 illustrates an example of elements of power transfer circuitry of a power receiver in accordance with some embodiments of the invention;
FIG. 10 illustrates an example of elements of power transfer circuitry of a power receiver in accordance with some embodiments of the invention; and
FIG. 11 illustrates an example of elements of power transfer circuitry of a power receiver in accordance with some embodiments of the invention.

### DETAILED DESCRIPTION OF THE EMBODIMENTS

The following description focuses on embodiments of the invention applicable to a wireless power transfer system utilizing a power transfer approach such as known from the Qi Specification or the Ki Specification. However, it will be appreciated that the invention is not limited to this application but may be applied to many other wireless power transfer systems.

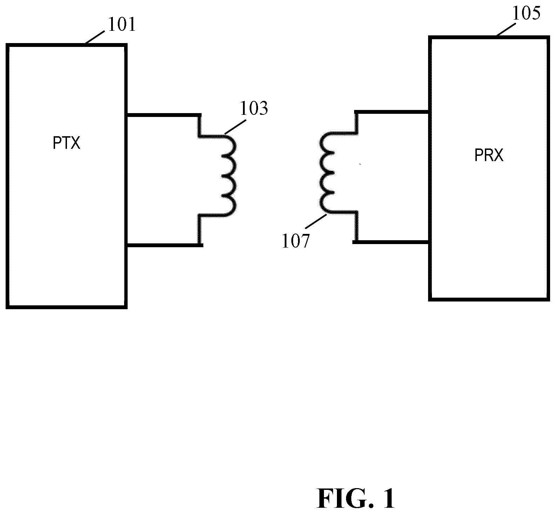

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. During power transfer the electromagnetic signal transfers power to the power receiver 105 (and specifically to the receiver coil 107) and it will in the following be referred to as the power transfer signal.

The power transfer signal may typically have a frequency between around 20 kHz to around 500 kHz, and often for Qi compatible systems typically in the range from 95 kHz to 205 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.2, in the range up to 100W for higher power applications such as power tools, laptops, drones, robots etc., and in excess of 100 W and up to more than 2000W for very high power applications, such as e.g. for Ki kitchen applications.

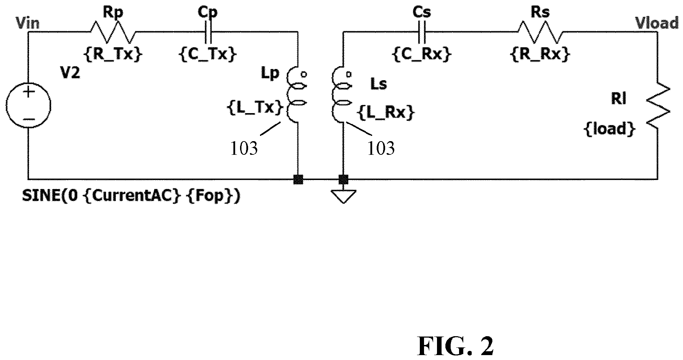

An example of an electrical equivalence diagram for the power transfer function of the power transmitter 101 and the power receiver 105 is illustrated in FIG. 2. A wide range of power transmitters and power receivers may exist in a given system and these may have substantially different properties and parameters. For example, the coil sizes, induction values, and loads may vary substantially. Accordingly, the system parameters, as specifically represented in FIG. 2, may in practice vary significantly between different devices, mechanical constructions, positioning etc. In particular, the placement of the power receiver, and thus the relative positions of the receiver coil 107 and the transmitter coil 103, substantially affect the coupling between the coils, i.e. the primary (power transmitter side) inductor Lp and the secondary (power transmitter side) inductor Ls, and thus may significantly change the system behavior.

In the following, the operation of the power transmitter 101 and the power receiver 105 will be described with specific reference to an embodiment generally in accordance with the Qi or Ki Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In most power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

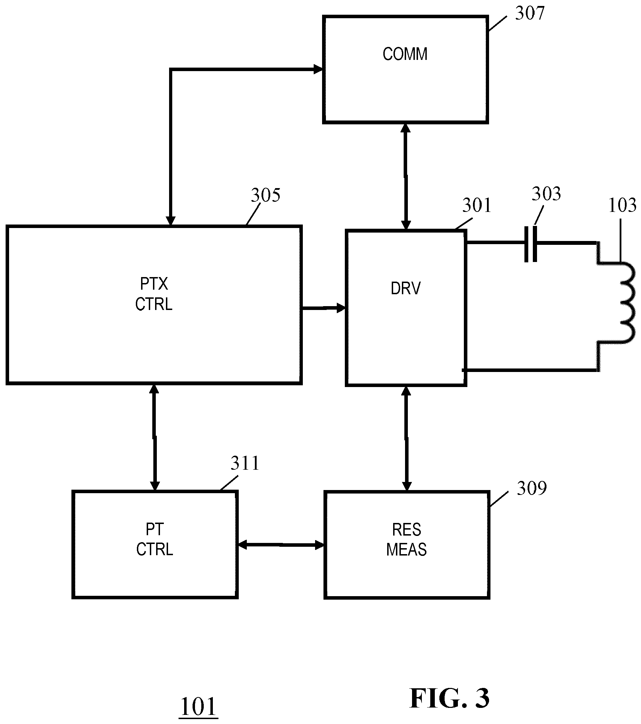

FIG. 3 illustrates exemplary elements of the power transmitter 101 of FIG. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

The use of a resonance circuit including the transmitter coil 103 is well known to provide a more efficient power transfer in many scenarios and enables control of the power transfer by the frequency of the drive signal. Furthermore, having a power receiver which also employs a resonance circuit, i.e. where the receiver coil 107 is part of a resonance circuit, may result in resonant power transfer which enables a highly efficient power transfer.

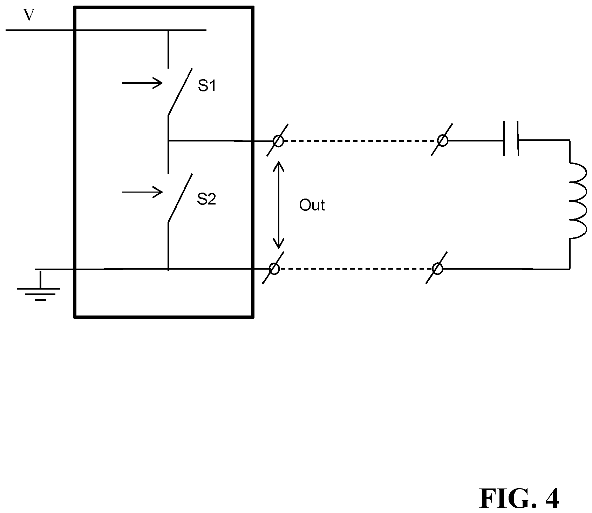

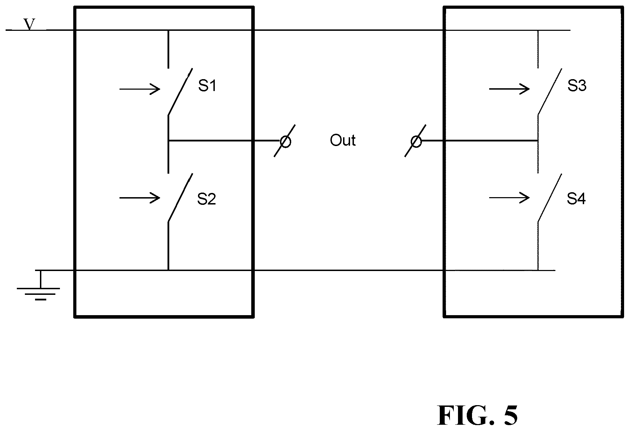

The driver 301 generates the current and voltage which is fed to the output resonance circuit and thus to the transmitter coil 103. The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S 1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 305 is in particular arranged to control the generation of the drive signal by the driver 301, and it can specifically control the power level of the drive signal, and accordingly the level of the generated power transfer signal. The power transmitter controller 305 comprises a power loop controller controlling a power level of the power transfer signal in response to the power control messages received from the power receiver 105 during the power transfer phase.

The power transmitter further comprises functionality for communicating with the power receiver 105. In the example of the power transmitter of FIG. 3, the power transmitter 101 comprises a first communicator 307 which is arranged to receive data and messages from the power receiver 105 as well as transmit data and messages to the power receiver 105 (as will be appreciated by the skilled person, a data message may provide one or more bits of information).

In the approach, the communication is performed by modulation of a separate communication carrier. The communication carrier signal is typically selected to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz.

In some embodiments, the communication may be in accordance with the Near Field Communication, NFC, Specifications and the power transmitter and power receiver may specifically include NFC functionality. In these embodiments, the communicators may implement (at least) the functionality of an NFC reader and/or writer respectively. Thus, in some embodiments, the communication drive signal/ communication carrier signal is a constant level (except for modulation) 13.56 MHz signal.

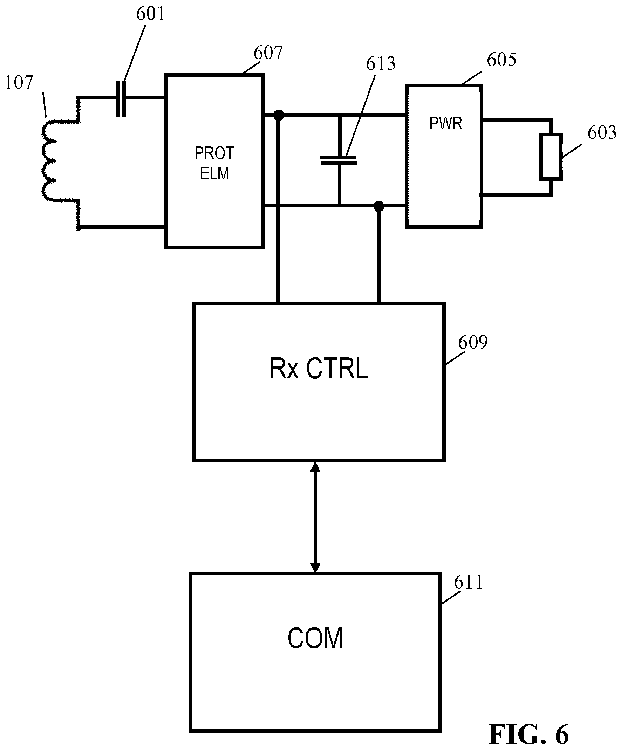

FIG. 6 illustrates some exemplary elements of the power receiver 105.

The power receiver 105 comprises a circuit which is arranged to extract power from the power transfer signal to generate an induced power signal. The circuit includes the receiver coil 107 arranged to extract power from the power transfer signal by induction, i.e. the magnetic field of the power transfer signal induces a signal in the receiver coil. In the example, the receiver coil 107 is coupled to a first capacitor 601 which together with the receiver coil 107 forms a first resonance. Thus, the receiver coil 107 may with the first capacitor 601 form a resonance circuit and the power transfer may be a resonant power transfer between resonance circuits.

The power receiver 105 further includes a power path that provides transfer power from the receiver coil 107 to a load 603. The load 603 represents the target load for the power transfer. The load 603 may for example be an external device, a battery or charging function, etc. The load 603 may also represent the loading by internal circuitry, such as control, support, and auxiliary circuits supporting the power transfer. The power path couples the power receiver 105 to the load 603 so that power extracted from the power transfer signal by the receiver coil 107 can be provided to the load 603.

In the example, the power path includes a power transfer circuit 605 which may include various functions that may be used to control and/or modify the power being provided to load 603.

In many embodiments, the power transfer circuit 605 may include a rectifier, and possibly a smoothing capacitor to provide a (smoothed) DC voltage and/or current. In many embodiments, the power transfer circuit 605 may include a voltage and/or current regulator. For example, in many embodiments, the power transfer circuit 605 may include a rectifier, a smoothing capacitor, and a voltage regulator to provide a regulated DC voltage to the load 603.

In many embodiments, the power transfer circuit 605 may also comprise a load switch which can switch the load 603 between being coupled to the receiver coil 107 and being decoupled from the receiver coil 107. The load switch may specifically be formed by a switch element, such as a relay, electrical switch, or transistor, that can connect or disconnect the load 603 from the power path.

The power path further includes a protective element 607 which can operate in a protective state in which a constraint is applied by the on power transfer from the receiver coil and in a non-protective state in which the constraint is not applied. The constraint may typically be a constraint/ restriction on a current and/or voltage, and specifically of a current to the load 603 and/or a voltage of the load 603. In many cases, the constraint may be an absolute constraint. In particular, in many embodiments, the protective element may be arranged to prevent any current and/or voltage being provided to the load (from the receiver coil 107) when the protective element 607 is in the protective state. Also, in many embodiments, the protective element 607 may be arranged to not provide any constraint or restriction of the current or voltage to the load 603 (from the receiver coil 107) when the protective element 607 is in the non-protective state.

The protective element 607 is arranged to switch from the non-protective state to the protective state in response to a detection of a failure condition for the power receiver. Thus, if a failure occurs in the power receiver this may result in the protective element 607 changing from not constraining the power to the load 603 to the power being constrained. Specifically, the protective element 607 may be arranged to terminate power provision to the load 603 when a failure occurs/is detected.

In many embodiments, the protective element 607 may be a series element which includes a current limitation when in the protective state but not when in the non-protective state. It may in many examples include a switch which is in series with the receiver coil 107 and the load 603 and which is open circuit when in the protective state and short circuit in the non-protective state (or in some embodiments having a resistance above a first threshold when in the protective state and below a second threshold when in the non-protective state where the second threshold is low than the first threshold).

In many embodiments, the protective element 607 may be a parallel element which includes a voltage limitation when in the protective state but not when in the non-protective state. It may in many examples include a switch which is in parallel with the receiver coil 107 and the load 603 and which is short circuit when in the protective state and open circuit in the non-protective state (or in some embodiments having a resistance above a first threshold when in the non-protective state and below a second threshold when in the protective state where the second threshold is low than the first threshold).

The failure detection may in some embodiments be based on a potentially complex evaluation of operational parameters e.g. using a suitable detection circuit or program. For example, a number of parameters and measurements may be considered and if a failure criterion is met, the protective element 607 may switch from the non-protective state to the protective state. In some cases, the criterion may include alternative requirements such as e.g. when a failure is considered to be detected if any of a plurality of measured values are outside an allowable operating range. Alternatively or additionally, the criterion may include conditional requirements such as e.g. when a failure is considered to be detected if all of a plurality of measured values are outside an allowable operating range.

The failure detection may be based on different parameters in different embodiments. In many embodiments, a current, and specifically a current of the power transfer (e.g. a current of the receiver coil 107 and/or the load 603), may be measured and if this exceeds a threshold (e.g. for a given duration) a failure is deemed to have occurred. Similarly, in many embodiments, a voltage, and specifically a voltage of the power transfer (e.g. a voltage over the receiver coil 107 and/or the load 603), may be measured and if this exceeds a threshold (e.g. for a given duration) a failure is deemed to have occurred. In many embodiments, the failure detection may alternatively or additionally consider a temperature of e.g. an element of the power receiver or an external element or load. Specifically, if a temperature of e.g. a component of the power receiver or of the load exceeds a given threshold indicative of normal or acceptable values, then a failure detection may be deemed to have occurred.

Thus, in many embodiments, the protective element 607 may be arranged to switch from the non-protective state to the protective state in response to a detection of an overcurrent, overvoltage and/or overheating condition being detected.

The failure detection may be an active detection based on a measurement or evaluation approach. Similarly, the switch from the non-protective state to the protective state may be an active switch performed by e.g. a suitable circuit or program in response to the failure detection.

However, in many other embodiments, the failure detection, and indeed the switching from the non-protective state to the protective state, may be a passive detection and switching. Indeed, in many cases the protective element 607 may be arranged to automatically and inherently change from one state to the other based on a property of the protective element 607. For example, the protective element 607 may be arranged to open circuit if the current over it exceeds a given threshold and/or may be arranged to short circuit if the voltage over it exceeds a given threshold.

The protective element 607 may in some embodiments be arranged to also switch from the protective state to the non-protective state, e.g. in response to a detection that the failure condition no longer exists (or e.g. in response to a different criterion). For example, if an overvoltage condition has triggered a transition to the protective state, the voltage (e.g. over the receiver coil 107) dropping below a given threshold (typically lower than the threshold required to switch to the protective state) may cause the protective element 607 to switch from the protective state to the non-protective state.

However, in many embodiments, the protective element 607 may be arranged to perform an irreversible operation when switching from the non-protective state to the protective state. Thus, the protective element 607 may be capable of only switching from the non-protective state to the protective state but not from the protective state to the non-protective state. Thus, in such cases, the protective element 607 may possibly be a single use circuit or component that may need replacement following a failure detection and a switch to the protective state.

Indeed, in many embodiments, the protective element 607 may be a sacrificial part. The protective element 607 may be designed to fail e.g. due to mechanical (e.g. thermal) or electrical stress such that other parts of the power receiver (or indeed the load 603) are protected.

In particular, in many embodiments, the protective element 607 may be implemented by a single passive component. For example, in some embodiments, the protective element 607 may be a thermal switch which open circuits at high temperature. In many embodiments, the protective element 607 may specifically be implemented as (or include) an electrical fuse. In some cases, the electrical fuse may be resettable but in many embodiments, the protective element 607 may simply be a single use electrical fuse. The following description will focus on examples where the protective element 607 is indeed implemented as a conventional electrical fuse which is in series with the receiver coil 107 and the load 603.

The protective element 607 may thus be an electronic component or circuit that provides protection of the power receiver and load 603 and which may specifically prevent damage or undesirable operation to occur even if a failure (such as a component failure) occurs.

The power receiver further includes a power receiver controller 609 which comprises various power receiver controller functionality required to perform power transfer, and in particular functions required to perform power transfer in accordance with the Qi or Ki Specifications.

The power receiver further comprises a communicator, referred to as the second communicator 611, which is arranged to communicate with the first communicator 307of the power transmitter. The second communicator 611 may specifically be an NFC communication functionality that can exchange data (in both directions) with the complementary power transmitter communicator 307.

The power receiver 105 is accordingly arranged to transmit data to the power transmitter 101. Such data may specifically include power control loop error messages used to implement a feedback power loop for controlling the power level of the power transfer signal during power transfer as will be known to the skilled person. The power receiver may in many embodiments be capable of transmitting a range of different messages serving different purposes as known to the skilled person. For example, a range of different messages such as those specified in the Qi or Ki Specifications may be transmitted.

A critical requirement for wireless power transfer is that it can be established in a safe and controlled way. The system may therefore implement a number of control and safety procedures and functionality. The inclusion of a protective element 607 as previously described may provide improved protection and operation in many scenarios. For example, in conventional cookware, it is a common practice to introduce a protective element in series with the load. An example of such a protective element can be any fuse, circuit breaker, or other unit preventing current flow from the power source toward the load. Such an approach may also advantageously be used in a wireless power transfer system.

However, the Inventors have realized that if the power transmitter does not adapt to such a protective element 607 being in the protective state, undesired operational situations may occur in some scenarios.

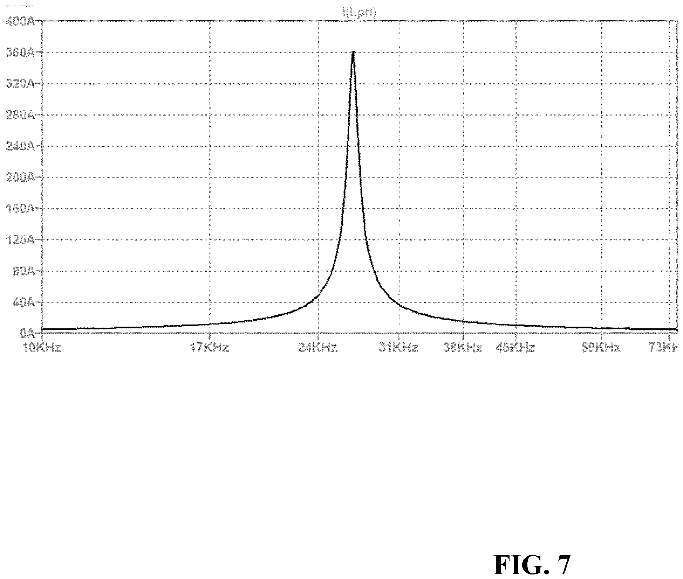

For example, if a series protective element 607 switches to the open circuit state during or before the power transfer, the power transfer parameters, and in particular often the resonant properties, change. For example, depending on the operating condition, the power transmitter operating point might shift closer to the resonance, and consequently, the primary current might reach increased values, which indeed even in some cases could be to such values that it may be destructive for some components of the system. For example, FIG. 7 illustrates an example where the primary current (the current through the transmitter coil 103) may reach values of hundreds of amperes. Such huge resonant currents tend to reduce the switching components' longevity and the power transmitter's lifetime in the field.

The Inventors have realized that it will be advantageous for the power transmitter to have knowledge of the state of the protective element 607 at the power receiver. However, they have also realized that the straightforward approach of the power receiver transmitting data to the power transmitter may not be advantageous in all situations. For example, during power transfer initialization, the power transmitter does not have any means to detect if the protective element 607 is in the protective state as communication, and indeed suitable detection circuitry, at the power receiver is typically not active until power transfer is initialized thereby allowing the power receiver to be powered.

In some cases, the power receiver may be arranged to extract power from a communication carrier to support control functionality. However, even in that case, it is practically often difficult and require additional complexity and/or components to determine the state of a protective element, such as a fuse.

In the described approach, the power receiver is arranged to change a resonance property for the circuit including the receiver coil 107 depending on whether the power receiver is in the non-protective state or in the protective state. The power transmitter may perform a measurement of the resonance behavior when the transmitter coil 103 is coupled to the receiver coil 107 and based on this resonance behavior, the power transmitter can determine whether the protective element 607 of the power receiver is in the non-protective state or the protective state.

The power transmitter is arranged to control/ modify/ adapt the power transfer operation dependent on the measured resonance property, and specifically dependent on whether that is indicative of the power receiver being in the non-protective state or protective state. Specifically, in many embodiments, the power transmitter may be arranged to inhibit power transfer if the measured resonance property meets a criterion that reflects that the protective element 607 is considered to be in the protective state. In many embodiments, the check may be performed during power transfer initialization and the power transmitter may prevent the power transfer initialization from leading to a power transfer. Thus, in many embodiments, if the measured resonance property indicates that the power receiver is in the protective state, the power transmitter may terminate a power transfer initialization. In some embodiments, the check may possibly be performed during an ongoing power transfer phase and the power transmitter may be arranged to terminate the power transfer if the measured resonance property indicates that the power receiver is in the protective state.

Specifically, the power receiver comprises a second capacitor 613 which is arranged to form a second resonance with the receiver coil 107. Thus, the arrangement of the receiver coil 107 and the first and second capacitors 601, 613 form a resonance arrangement that has two resonances, and accordingly which have two resonance frequencies. Indeed, in some embodiments, more capacitors may be included and more resonance frequencies may be present.

In the approach, the first capacitor 601 forms a resonance with a resonance frequency that is typically relatively close to the power transfer signal, and which provides a resonance for the resonant power transfer from the power transmitter to the power receiver. The first resonance frequency of the resonance circuit is arranged to not exceed twice the (maximum) frequency of the power transfer signal. In many embodiments, the power transmitter may be arranged to generate the power transfer signal to have a frequency within a given frequency range and the first resonance frequency may at the most be twice the maximum frequency of the frequency range. In many embodiments, the first resonance frequency may be higher than the maximum frequency of the power transfer signal but it will be appreciated that in some cases the first resonance frequency may selected to be less than a (minimum) frequency of the power transfer signal. In such cases, the first resonance frequency may often be no less than half the minimum frequency of the power transfer signal.

Thus, in many embodiments the first resonance frequency may be close to an operating frequency range of the power transfer signal but possibly outside the operating frequency range itself. Such an approach may allow resonant power transfer but allow the frequency to be varied to control the amount of power that is transferred. The power transmitter may specifically be arranged to change the frequency of the power transfer signal to be changed towards the first resonance frequency in order to increase the level of the power transfer and to change it away from the first resonance frequency in order to decrease the level of the power transfer.

In many embodiments, the first resonance frequency may be no more than twice a resonance frequency of the output resonance circuit of the power transmitter or less than half the resonance frequency of the output resonance circuit of the power transmitter.

In the example, the first capacitor 601 forms a series resonance with the receiver coil 107.

The second resonance frequency is arranged to be substantially different from the first resonance frequency, and it specifically differs from the first resonance frequency by at least a factor of two, or in many embodiments even by a factor of three, five or even ten. Thus, the second resonance frequency is no less than twice the first resonance frequency or no more than half the first resonance frequency. In most embodiments, the second resonance frequency may be higher than the first resonance frequency as this may often facilitate detection and measurements at the power transmitter and allow for smaller and cheaper components (e.g. a lower capacitance of the second capacitor).

In the example, the second capacitor 613 forms a series resonance with the receiver coil 107.

The first frequency is in many embodiments higher than 10kHZ or 20 kHz, and/or lower than 40kHz, 50 kHz, or 100 kHz. The first resonance frequency may specifically have a resonance frequency in accordance with the approach of the Ki specifications. The second resonance frequency is in many embodiments above 200 kHz.

In the approach the power receiver accordingly has two resonances for the receiver coil 107 with the resonance frequencies differing substantially (at least by a factor of two). The bigger the difference, the easier it is to detect which frequency is visible in the circuit. For example, the impact of the second resonance on the resonant power transfer operation based on the first resonance frequency may be kept small due to dampening by the load and indeed may be insignificant in most embodiments. Similarly, the impact of the first resonance on the second resonance may be negligible. Thus, in the system the operations based on respectively the first and second resonances may be considered and performed separately and individually, and indeed typically without considering the other resonance.

Further, due to the difference in the resonance frequencies, the first resonance may be considered to be formed by the receiver coil 107 and the first capacitor 601 and thus the first resonance frequency may be considered to be determined by the inductance of the receiver coil 107 and the capacitance of the first capacitor 601. Similarly, the second resonance may be considered to be formed by the receiver coil 107 and the second capacitor 613 and thus the second resonance frequency may be considered to be determined by the inductance of the receiver coil 107 and the capacitance of the second capacitor 613. In practice, the resonance frequencies may be offset or modified slightly by the presence of the other capacitor, but such effects are typically negligible and indeed the described principles are not dependent on or sensitive to such effects.

The power receiver is arranged to change a resonance property of the second resonance dependent on whether the power receiver is in the non-protective state or in the protective state. The resonance property may typically be a resonance frequency or a quality factor of the second resonance, including simply whether the second resonance is present or not.

Indeed, in many embodiments, the power receiver may be arranged to inhibit and/or remove the second resonance when in the protective state, i.e. the second resonance may be present when the power receiver is in the non-protective state but not when in the protective state. Specifically, in some embodiments where the second capacitor 613 is in parallel with the receiver coil 107, the power receiver may be arranged to disconnect the second capacitor 613 from the circuit when it enters the protective state. Correspondingly, in some embodiments where the second capacitor 613 is in series with the receiver coil 107, the power receiver may be arranged to short circuit the second capacitor 613 from the circuit when it enters the protective state.

In some embodiments, the protective element 607 may be arranged to change the resonance frequency of the second resonance frequency when entering the protective state. For example, the second resonance may be determined by two capacitors (equivalent to the second capacitor 613 being formed by two capacitors) and one of these may be switched in or disconnected when in the protective state relative to when in the non-protective state. For example, a fixed capacitor may be coupled with a switchable capacitor (e.g. in parallel or series) that is switched between dependent on whether the protective element 607 is in the non-protective state and being in the protective state.

Alternatively or additionally, in some embodiments, the protective element 607 may be arranged to change a quality of the second resonance frequency when entering the protective state. For example, a switchable resistor may be coupled in series or parallel with the second capacitor 613 and switched in (or out) when the protective element 607 switches from the non-protective state to the protective state.

The power transmitter may as previously mentioned be arranged to determine a resonance property, such as specifically a resonance frequency or a quality factor (including whether the second resonance is present) and based on this may be arranged to modify the power transfer operation.

The power transmitter may specifically comprise a resonance measurement circuit 309 which is arranged to determine a measured resonance property for the transmitter coil 103 when coupled to the receiver coil 107. The resonance property is determined for a frequency (specifically a frequency range) that differs from the frequency of the power transfer signal by at least a factor of two. The resonance measurement circuit 309 is specifically arranged to determine a measured resonance property in a frequency range in which the second resonance frequency may be present.

There are multiple ways the resonance measurement circuit 309 can identify resonant properties of the power receiver. One example of implementation can be a frequency sweep during which the power transmitter applies the low amplitude signal with changing frequency (e.g., 20 kHz... 500kHz) to the transmitter coil 103 while measuring current through the power coil. An envelope (derived via, e.g., Hilbert transform) of such measurement is effectively a bode plot that depicts both series and parallel system resonances.

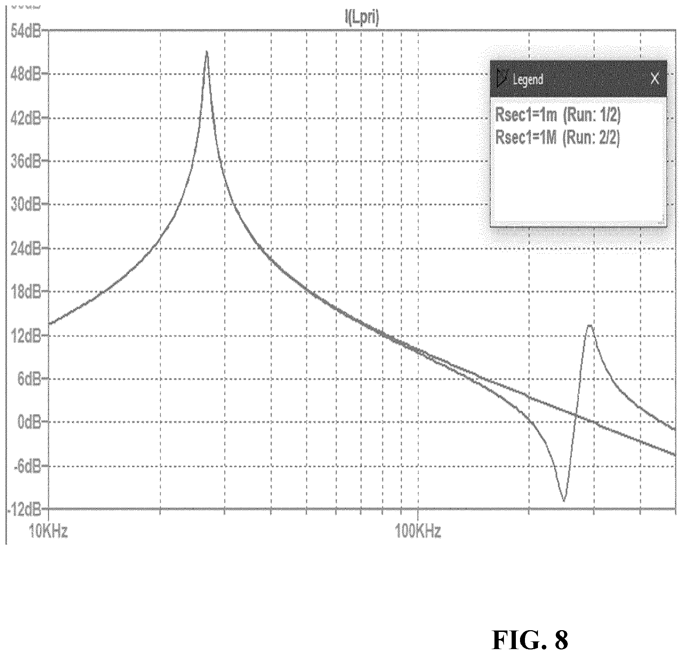

The resonance measurement circuit 309 may specifically perform a frequency sweep in a frequency range in which the second resonance may be present. It may then determine if any resonances are present, and/or the frequency of any resonance and/or the quality factor of any resonance. FIG. 8 illustrates an example of a measurement of a frequency sweep for respectively a situation where the second resonance is present and when it is not.

Alternatively, instead of sweeping, the resonance measurement circuit 309 may measure the transmitter coil 103 impedance at pre-determined frequencies and detect if the secondary resonance is present by measuring the impedance at this frequency/these frequencies. In some such embodiments, a plurality of measurements may be made to reflect that the second resonance frequency may be dependent on the coupling between the transmitter coil 103 and the receiver coil 107.

As a specific example, the second resonance frequency may be predetermined to have a specific value when the power receiver is in the non-protective state. The resonance measurement circuit 309 may then perform an impedance measurement for that frequency and if the resulting impedance meets a given requirement (such that it is e.g. substantially resistive), a resonance may be determined to be present and otherwise it may be determined to not be present. The power transmitter may then determine that the protective element 607 is in the non-protective state (if a second resonance is present) and otherwise is in the protective state (if the second resonance is not present).

The resonance measurement circuit 309 is coupled to a power controller 311 which is arranged to control the power transfer to the power receiver in dependence on the measured resonance property. Specifically, the power controller 311 is arranged to control the power transfer to the power receiver in dependence on whether the measured resonance property is indicative of the protective element 607 being in the non-protective state or the protective state. The power controller 311 may be arranged to modify the power transfer operation if the measured resonance property meets a criterion for the protective element 607 being in the protective state. For example, if no resonance is detected at (or around) the expected second resonance frequency (e.g. because it has been moved to a different resonance frequency, has been attenuated by reducing the quality factor e.g. by coupling in a resistor, or has been removed completely by disconnection of the load), it may be determined that the protective element 607 is in the protective state.

In many embodiments, the power controller 311 is arranged to inhibit power transfer in response to a detection that the measured resonance property meets a criterion indicating that the protective element 607 is in the protective state. In case this happens during the power transfer operation, the power controller 311 may proceed to control the transmitter controller 305 to immediately terminate the power transfer.

However, in many embodiments, the evaluation may typically be performed during a power initialization process. Specifically, as part of the power transfer initialization, the transmitter controller 305 may control the resonance measurement circuit 309 to perform a measurement of the resonance property and the power controller 311 to determine if the result matches a criterion for the protective element 607 being in the protective state. If so, the power controller 311 will control the transmitter controller 305 to terminate the power transfer initialization such that the power transfer does not start.

As previously described, the power receiver may implement the protective element 607 in different ways in different embodiments. In many embodiments, the protective element 607 is a series protective element 607 that is coupled in series between the receiver coil 107 and the load 603 and with the protective element 607 being arranged to increase the impedance, e.g. by at least a factor of 2,5,10, 100 or more times. Specifically, the protective element 607 may be a series protective element 607 arranged to open circuit when entering the protective state.

In such a case, the second capacitor 613 may be positioned on the side of the load 603. Specifically, the protective element 607 may have a first connector and a second connector with the first connector being coupled, and typically connected, to the receiver coil 107 and the second connector being coupled, and typically connected, to the load 603. When in the non-protective state, the resistance between the first and second connector when in the non-protective state may be much (say by a factor of 10) lower than when in the protective state, and specifically the protective element 607 may provide a short circuit between the first connector and the second connector when in the non-protective state and an open circuit when in the protective state. The second capacitor 613 may in such a case be coupled to the second connector, i.e. it is coupled to the same connector as the load 603.

As a result, when in the non-protective state, the second capacitor 613 is also coupled to the receiver coil 107 via the protective element 607 and accordingly it provides a second resonance. However, when in the protective state, the second capacitor 613 is not coupled to the receiver coil 107 (or is coupled via a larger resistance) and thus no second resonance is present (or is substantially dampened and has a low quality factor).

Such an approach may be particularly suitable for situations where the protective element 607 is a current limiting element. It may allow a low complexity and in particular where the protective element 607 also switches between states based on the current from the receiver coil 107 to the load 603. For example, the protective element 607 may have a current sensing function that measures the current from the first connector to the second connector and which switches to the protective state if this exceeds a level (e.g. instantaneously or if the level is exceeded for a given duration). Such functionality may be implemented with simple latching current limiting circuitry. Indeed, such an approach may even advantageously in many embodiments be implemented using an electrical fuse as the protective element 607. Indeed, such an implementation may provide excellent performance in many embodiments with a low complexity and low cost electrical fuse providing a high level of safety using e.g. a sacrificial component. Further, simply coupling the second capacitor 613 to the load side of the fuse will allow it to be disconnected when the fuse blows (corresponding to it moving from the non-protective state (normal operating fuse providing a short circuit) to the protective state (blown fuse providing an open circuit).

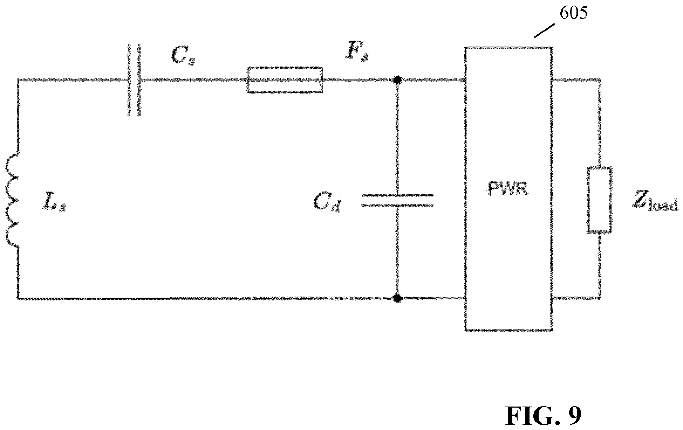

An advantageous example of such embodiments is illustrated in FIG. 9 where Lₛ indicates the receiver coil 107, C_{S} indicates the first capacitor 601, C_{d} indicates the second capacitor 613, Z_{load} indicates the load 603, and Fₛ indicates the protective element 607 which in the specific example is implemented by an electrical fuse. During normal operation in the non-protective state, the fuse is short circuited and the circuit exhibits a resonance in the form of the second resonance determined by second capacitor 613 (assuming that the load provided by the power transfer circuit 605 is sufficiently high ohmic to not dampen the second resonance). However, when the fuse blows, the second capacitor 613 is disconnected from the receiver coil 107 and no second resonance is exhibited. The power transmitter can accordingly detect the state of the fuse by measuring whether the second resonance is present or not. The approach may provide a simple yet robust way of detection if the series protection element in the power receiver is open.

In some cases, and indeed in many practical cases, the load impedance Z_{load} may effectively dampen/ prevent the second resonance due to it being so low ohmic that it dominates performance. However, in many practical embodiments, the power transfer circuit 605 includes a load switch that disconnects the load (Z_{load}) e.g. outside of the power transfer phase and the described operation may be performed at times when the load impedance is disconnected, such as during an initialization phase prior to the power transfer phase.

The detection of the second resonance at a substantial, and typically higher, frequency than the first resonance frequency and the operating frequencies of the power transfer signal, may in many scenarios and embodiments be substantially more accurate and reliable than e.g. trying to detect the presence of the first resonance frequency. Indeed, a change of the first resonance, which is typically at a much lower frequency, may not be sufficiently substantial to be reflected on the primary side. This is particularly due to the power transmitter in many cases also implementing a resonance circuit with a resonance frequency close to the first resonance frequency and the operating frequency of the power transfer signal. Such a power transmitter based resonance may typically be strong and the effect of the first resonance of the power receiver may be difficult to detect at the power transmitter as it is masked by the power transmitters own resonance.

In many cases, the first resonance is during operation substantially dampened by the load, thereby making it difficult to detect. The second resonance may often be arranged to have a unloaded path when the load is disconnected, such as during power transfer initialization, thereby allowing improved detection.

In some embodiments, the power receiver may be arranged to exhibit a second resonance both when in the non-protective state and when in the protective state but to change the second resonance frequency between the two states. This may specifically be achieved by a third capacitor which together with the second capacitor 613 forms the second resonance when the protective element 607 is in the non-protective state and which forms the second resonance without the second capacitor 613 when the protective element 607 is in the protective state. This may specifically be achieved by the third capacitor being coupled, and specifically connected, to the receiver coil 107 both when the protective element 607 is in the non-protective state and the protective state.

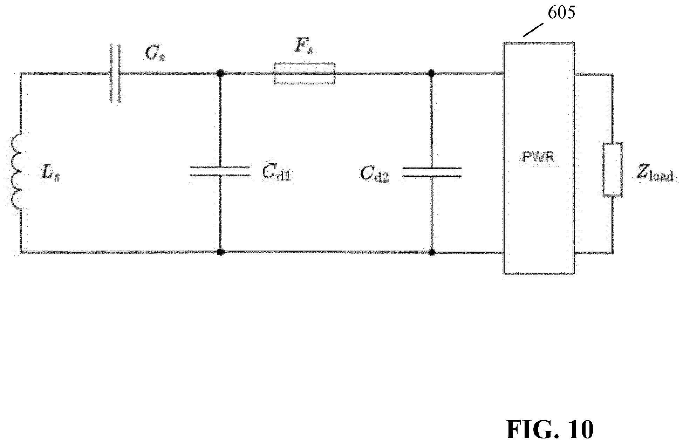

An example of such an approach is shown in FIG. 10 where the resonant properties of the second resonance is modified by splitting the parallel resonance capacitor Cd into two physical instances with one before and one after the protective element 607, and specifically before and after the fuse. In this case, if the fuse is closed/ short circuit in the non-protective state, the parallel resonant frequency is determined by Lₛ, Cₛ, and C_{d1}+C_{d2}. If the fuse blows and open circuits, it is instead given by Lₛ, Cₛ, and C_{d1}. As the capacitance is accordingly lower in the protective state, the parallel resonance frequency becomes higher. A particular advantage is to have fixed values for the parallel resonance frequencies so that power transmitter can unambiguously identify the power receiver with the open serial protection element.

In many embodiments, the power receiver may comprise a load switch arranged to switch the load 603 between being coupled to the receiver coil and being decoupled from the receiver coil. In the example of FIG. 6, such a switch may for example be implemented as part of the power transfer circuit 605. Such a load switch may for example be used to only couple the load when conditions are suitable for the load (such as e.g. a suitably regulated voltage is present for being provided to the load, e.g. following power transfer initialization). For example, a load disconnect switch in the power receiver may often be opened before the power transfer is initiated.

In some embodiments, the second resonance may further be dependent on the state of the load switch. Specifically, the power receiver may include a load switch capacitor which is coupled to the receiver coil 107 when the power receiver is in the non-protective state and when the load switch couples the load 603 to the receiver coil 107 and is decoupled from the receiver coil 107 when the load switch decouples the load 603 from the receiver coil 107.

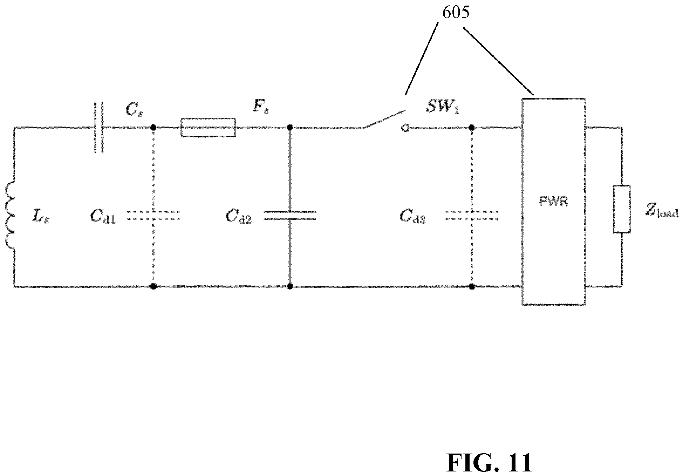

Specifically, the load switch may be a series switch in series with the receiver coil 107 and the load 603 and the load switch capacitor may be positioned on the load side of the load switch. An example corresponding to a modification of the examples of FIGs. 9 and 10 are shown in FIG. 11 where C_{d3} represents the load switch capacitor and SW₁ indicates the load switch which is shown separately to the rest of the power transfer circuit 605.

In such cases, the power transmitter may accordingly detect the state of the load switch based on whether the second resonance indicates that the load switch capacitor is impacting the second resonance or not. For example, a frequency sweep may be performed to determine the second resonance frequency and match it to expected values for respectively the power receiver being in the protective state, in the non-protective state with the load switch open, and in the non-protective state with the load switch closed.

The power transmitter may then be arranged to adapt the power transfer depending on the state of the load switch.

As described above, the power receiver may implement the change of the resonance property in different ways in different embodiments and scenarios, such as for example by changing a resonance frequency or a resonance property. In some cases, different approaches may be used by different power receivers in the same system.

In such cases, the power receiver may be arranged to transmit configuration data indicative of a dependency of a property of the second resonance, and specifically the second resonance frequency, on whether the protective element is in the protective state or in the non-protective state.

The configuration data may in some embodiments directly indicate different values for the resonance frequency, such as resonance frequencies for respectively the non-protective state and for the protective state, or may in some embodiments indicate an indication of a component arrangement of at least part of the power receiver. The configuration data may for example describe a component or circuit topology, or may e.g. describe the effect of the protective element 607 switching to the protective state on the effective circuitry of the power receiver.

The power transmitter may then proceed to determine the expected values of the resonance property for the non-protective state and protective state and the power controller 311 may proceed to adapt the decision criteria accordingly.

In some cases, the power receiver may for example transmit an indication of the topology or circuit arrangement of the power receiver. For example, data may be transmitted to indicate whether a circuit arrangement corresponding to that of FIGs. 9, 10 or 11 is implemented in the power receiver.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power receiver (105) for wirelessly receiving power from a power transmitter (101) via an electromagnetic power transfer signal, the power receiver (105) comprising:
a circuit (107, 601,613) comprising a receiver coil (107) being part of a resonance circuit having a first resonance and a second resonance formed by the receiver coil (107) and at least a first capacitor (601) and a second capacitor (613), the first resonance having a first resonance frequency and the second resonance having a second resonance frequency, the first resonance frequency not exceeding twice a frequency of the power transfer signal and the second resonance frequency differing from the first resonance frequency by at least a factor of two;
a power path (607, 605) coupling the receiver coil (107) to a load (603) and being arranged to provide power from the receiver coil (107) to the load, the power path comprising:
a protective element (607) arranged to operate in a protective state in which a constraint on power transfer from the receiver coil (107) is applied and in a non-protective state in which the constraint is not applied, the protective element (607) being arranged to switch from the non-protective state to the protective state in response to a detection of a failure condition for the power receiver (105);
and
wherein a resonance property of the second resonance is different for the protection element (607) being in the protective state than for the protection element (607) being in the non-protective state.

2. The power receiver of claim 1 wherein the protective element (607) comprises a current limier arranged to limit a current through the protective element (607) when in the protective state relative to when in the non-protective state.

3. The power receiver of claim 2 wherein the protective element (607) is coupled in series between the receiver coil (107) and the load (603), and the second capacitor (613) is coupled to a connection of the protective element (607) also coupled to the load (603).

4. The power receiver of any previous claim wherein the first capacitor (601) is in series with the receiver coil (107) and the load (603), and the second capacitor (613) is in parallel with the receiver coil (107) and the load (603).

5. The power receiver of any previous claim wherein the protective element (607) is arranged to decouple the second capacitor (613) from the receiver coil (107) when in the protective state.

6. The power receiver of claim 4 wherein the input circuit comprises a third capacitor and the second resonance formed by the receiver coil (107) and at least the second capacitor (613) and the third capacitor, the third capacitor being coupled to the receiver coil (107) both when the protective element (607) is in the protective state and when in the non-protective state.

7. The power receiver of any previous claim further comprising a communicator (611) for transmitting data to the power transmitter (101), the communicator (611) being arranged to transmit configuration data indicative of a dependency of the resonance property on whether the protective element (607) is in the protective state or in the non-protective state.

8. The power receiver of any previous claim further comprising a load switch arranged to switch the load and a fourth capacitor between being coupled to the receiver coil (107) and being decoupled from the receiver coil (107), the second resonance being formed by at least the second capacitor and the fourth capacitor when the fourth capacitor is coupled to the receiver coil (107).

9. The power receiver of any previous claim wherein the protective element (607) is an electrical fuse, and the second capacitor (613) is disconnected from the power receiver coil (107) if the electrical fuse is open-circuit.

10. The power receiver of any previous claim wherein the protective element (607) is a sacrificial part.

11. A wireless power transfer system comprising a power receiver (105) in accordance with any of the previous claims and a power transmitter (101) comprising:
a transmitter coil (103) arranged to couple to the receiver coil (107);
a driver (301) arranged to generate a drive signal for the transmitter coil (103) to generate the electromagnetic power transfer signal;
a measurer (309) arranged to determine a measured resonance property for the transmitter coil (103) when coupled to the receiver coil (107), the measured resonance property being for a frequency differing from a frequency of the power transfer signal by at least a factor of two; and
a controller (311) arranged to control the power transfer to the power receiver (105) in dependence on the measured resonance property.

12. The wireless power transfer system of claim 11 wherein the power controller (311) is arranged to inhibit power transfer in response to a detection that the measure resonance property meets a criterion indicating that the power receiver is in the protective state.

13. The wireless power transfer system of claim 11 or 12 wherein the measurer (309) is arranged to determine the measured resonance property from a comparison of load measures of the transmitter coil (103) for at least two different frequencies.

14. A method of operation for a power receiver (105) for wirelessly receiving power from a power transmitter (101) via an electromagnetic power transfer signal, the power receiver (105) comprising:
a circuit (107, 601,613) comprising a receiver coil (107) being part of a resonance circuit having a first resonance and a second resonance formed by the receiver coil (107) and at least a first capacitor (601) and a second capacitor (613), the first resonance having a first resonance frequency and the second resonance having a second resonance frequency, the first resonance frequency not exceeding twice a frequency of the power transfer signal and the second resonance frequency differing from the first resonance frequency by at least a factor of two;
a power path (607, 605) coupling the receiver coil (107) to a load (603) and being arranged to provide power from the receiver coil (107) to the load, the power path comprising:
a protective element (607) arranged to operate in a protective state in which a constraint on power transfer from the receiver coil (107) is applied and in a non-protective state in which the constraint is not applied, the protective element (607) being arranged to switch from the non-protective state to the protective state in response to a detection of a failure condition for the power receiver (105); and the method comprises changing a resonance property of the second resonance when the protective element is (607) in the protective state relative to when the protective element (607) is in the non-protective state.

15. A method of operation wireless power transfer system comprising a wireless power transmitter providing power to a power receiver via an electromagnetic power transfer signal, wherein the power receiver (105) comprises:
a circuit (107, 601,613) comprising a receiver coil (107) being part of a resonance circuit having a first resonance and a second resonance formed by the receiver coil (107) and at least a first capacitor (601) and a second capacitor (613), the first resonance having a first resonance frequency and the second resonance having a second resonance frequency, the first resonance frequency not exceeding twice a frequency of the power transfer signal and the second resonance frequency differing from the first resonance frequency by at least a factor of two;
a power path (607, 605) coupling the receiver coil (107) to a load (603) and being arranged to provide power from the receiver coil (107) to the load, the power path comprising:
a protective element (607) arranged to operate in a protective state in which a constraint on power transfer from the receiver coil (107) is applied and in a non-protective state in which the constraint is not applied, the protective element (607) being arranged to switch from the non-protective state to the protective state in response to a detection of a failure condition for the power receiver (105); and the power transmitter comprises:
a transmitter coil (103) coupling to the receiver coil (107);
and the method comprises:
the power receiver changing a resonance property of the second resonance when the protective element is in the non-protective state relative to when the protective element is in the non-protective state; and the power transmitter performing the steps of:
generating a drive signal for the transmitter coil (103) to generate the electromagnetic power transfer signal;
determining a measured resonance property for the transmitter coil (103) when coupled to the receiver coil (107), the measured resonance property being for a frequency differing from a frequency of the power transfer signal by at least a factor of two; and
controlling the power transfer to the power receiver (105) in dependence on the measured resonance property.
